# EUROPEAN PATENT APPLICATION

(11) **EP 2 664 809 A1**
(43) Date of publication of application: **20.11.2013**
(21) Application number: 12425093.7
(22) Date of filing: 16.05.2012
(51) Int. Cl.: F16C 33/62, F16C 33/66, F16C 19/16

(54) **Rolling bearing**

(71) Applicant: AGUSTAWESTLAND S.p.A., 21017 Samarate (Varese) (IT)
(72) Inventor: Bardinelli, Alberto, 21017 Samarate (IT); Motta, Nicoletta, 21017 Samarate (IT); Gasparini, Giuseppe, 21017 Samarate (IT)
(74) Representative: Di Sciuva, Michele

(57) **Abstract**

A rolling bearing (9a, 9b, 9c; 9a') having: a first ring (50, 51) extending about an axis (A); a second ring (51, 50) extending about the axis (A); and at least one ball (52) interposed radially with respect to the axis (A) between the first and second ring (50, 51), and designed to roll on a first race (53, 54) of the first ring (50, 51) and a second race (54, 53) of the second ring (51, 52); the bearing having a coating (60, 61) of antifriction material applied to at least part of the first race (53, 54) of the first ring (50, 51).

## Description

The present invention relates to a rolling bearing.

More specifically, the present invention relates to a rolling bearing for an aircraft, e.g. helicopter, transmission.

As is known, helicopters are normally equipped with a number of transmissions for transmitting power from one or more turbines to the main and/or tail rotor, and/or to a number of accessory devices, e.g. for powering the on-board instruments.

At least one transmission comprises :
- an input shaft connected to and rotating at the same speed as the turbine, and connected at the opposite end from the turbine to a bevel gear for transmitting power to a downstream accessory device;
- a casing housing the input shaft;
- a number of bearings for supporting the input shaft in rotary and axially fixed manner inside the casing; and
- a feed device for feeding lubricating oil from a tank to the bearings.

The input shaft bearings are normally rolling bearings, and substantially comprises :
- an outer ring fixed to the casing;
- an inner ring cooperating with the rotating member; and
- a number of rolling bodies interposed between and rolling on the inner and outer rings.

The transmission bearings must meet various requirements.

Firstly, they must be able to withstand the radial and axial loads generated by the bevel gear when the input shaft rotates at the same speed as the turbine, i.e. between 6000 and 33000 rpm.

Secondly, they must ensure the transmission can continue operating properly for a given length of time in the event of a malfunction of the lubricating oil feed device.

Consequently, friction between the rolling bodies and the inner and outer rings must be minimized, particularly at the above high rotation speeds.

One known bearing, employing balls as rolling bodies, is illustrated in Patent Application WO2012/016937.

In this case, the bearing also has a coating of high-friction material on :
- the race of the outer ring cooperating with the casing; and/or
- the race of the inner ring cooperating with the rotating member;
to prevent relative movement between the outer ring and the casing, or between the inner ring and the rotating member.

Because the coating increases friction between the balls and the inner and outer ring races, ball bearings of this type make conformance with certification standards even more difficult.

Another known type of bearing, employing conical rollers as rolling bodies, is illustrated in Patent Application DE102010030648.

The conical rollers of this bearing are subject, in known manner, to an axial force which tends to expel the rollers from the bearings.

The bearing therefore also comprises an axial collar, which cooperates with one face of the rollers to counteract the axial force and retain the rollers inside the bearing.

The bearing in Patent Application DE102010030648 also comprises a coating of low-friction material on at least a surface portion of the rolling bodies cooperating with the inner and outer ring, and/or on the face of the rolling bodies facing the collar.

Alternatively, the coating may be applied to the inner and outer ring races cooperating with the rolling bodies.

Though successfully counteracting the axial forces on the input shaft, conical roller bearings of this type are unsuitable for use on the input shaft connected to a helicopter turbine.

That is, conical roller bearings of this type invariably involve friction between the rolling bodies and the races and between the collar and the rolling body faces, and which, though reduced by the coatings, prevents the bearings being used to support the input shaft connected directly to the turbine.

Using balls as rolling bodies is the best solution in terms of reducing friction.

A 'ball' bearing is therefore the obvious choice for supporting axial and radial loads at high speed, as required to support the input shaft connected to the turbine.

As noted by the Applicant, however, known 'ball' bearings still leave room for improvement in terms of reducing sliding friction between the rolling bodies and the inner and outer ring races.

One cause of such sliding friction is the impossibility of achieving a pure rolling movement of the balls on both the inner and outer ring races, thus causing the balls to slide.

Another lies in the balls contacting the inner and outer ring races along a curved elliptical surface, as opposed to a point contact, thus dissipating the power transmitted and generating heat.

A need is felt within the industry to support the input shaft connected to the turbine with as little loss as possible due to friction, and using 'ball' bearings.

Another design goal within the industry is to ensure efficient operation of the input shaft for a given length of time in the event of lubricant shortage or no lubricant supply at all to the bearings.

It is an object of the present invention to provide a simple, low-cost rolling bearing designed to meet at least one of the above requirements.

According to the present invention, there is provided a rolling bearing comprising :
- a first ring extending about an axis;
- a second ring extending about said axis; and
- at least one ball interposed radially with respect to said axis between said first and second ring, and designed to roll on a first race of said first ring and a second race of said second ring;
and characterized by comprising a coating of antifriction material applied to at least part of said first race of said first ring.

A preferred non-limiting embodiment of the present invention will be described by way of example with reference to the accompanying drawings, in which:
Figure 1 shows a view in perspective of a helicopter comprising a transmission featuring a rolling bearing in accordance with a first embodiment of the present invention;
Figure 2 shows a larger-scale axial section of the Figure 1 transmission;
Figure 3 shows a larger-scale view of a bearing area in Figures 1 and 2;
Figure 4 shows a larger-scale axial section of a transmission featuring a rolling bearing in accordance with a second embodiment of the present invention;
Figure 5 shows a larger-scale view of a bearing area in Figure 4.

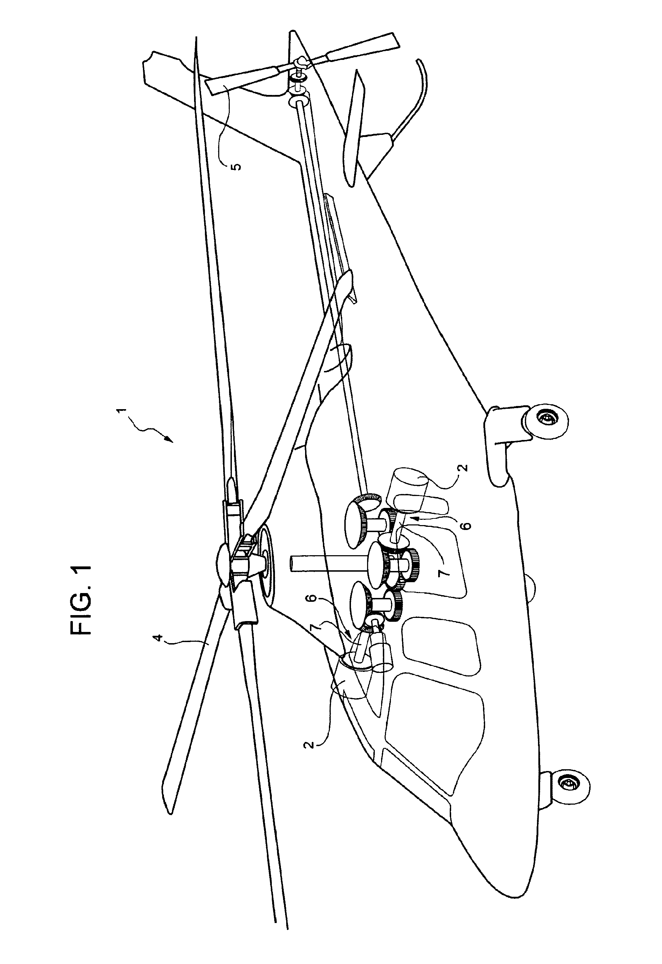

Number 1 in Figure 1 indicates a helicopter comprising two turbines 2, a main rotor 4, and a tail rotor 5.

Helicopter 1 comprises a number of secondary transmissions 6 for transmitting power from a turbine 2 to respective known accessory devices (not shown), i.e. for powering respective on-board equipment, for example.

For the sake of simplicity, the following description is limited to one transmission 6, but also applies to the others.

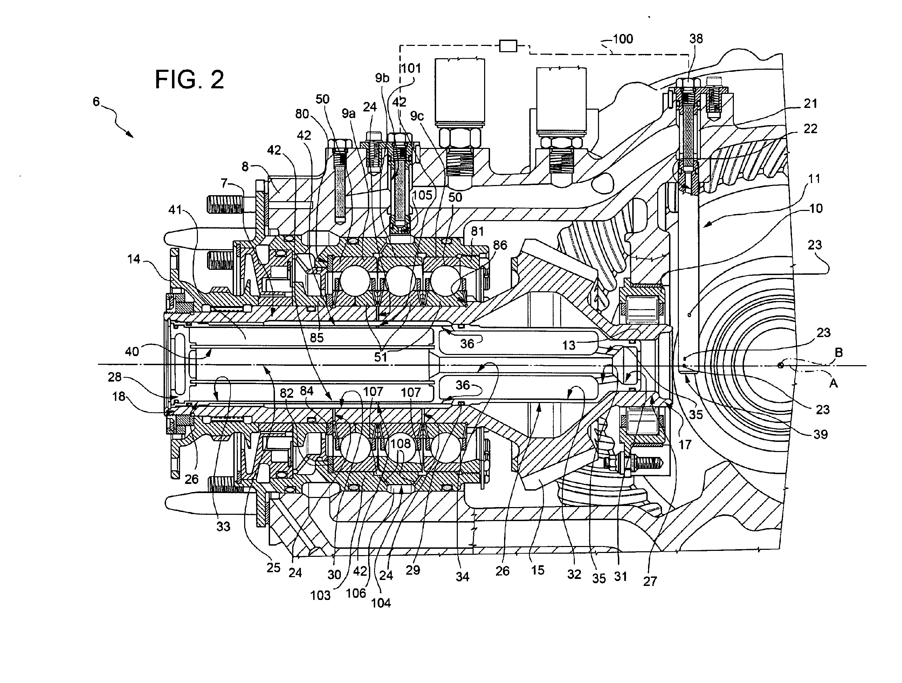

As shown in Figure 2, transmission 6 comprises a transmission shaft 7 rotating about an axis A; a casing 8 secured to a fixed structure of helicopter 1 and coaxially housing shaft 7; and a number of bearings 9a, 9b, 9c, 10 interposed radially between shaft 7 and casing 8 to support shaft 7 in axially fixed, rotary manner inside casing 8.

Shaft 7 is connected functionally to turbine 2 to rotate about axis A at the same speed as turbine 2, i.e. with no speed reducing or increasing device between turbine 2 and shaft 7.

Said rotation speed ranges between 6000 and 30000 rpm.

Transmission 6 also comprises :
- a known oil tank (not shown); and
- a lubricating circuit 100 (only shown schematically) for feeding lubricating oil from the tank to bearings 9a, 9b, 9c, 10.

More specifically, circuit 100 comprises a nozzle 101; and a feed device 11 connected fluidically (in a manner not shown) to the tank to feed oil to different parts of bearings 9a, 9b, 9c, 10.

At respective opposite axial ends 18 and 17, shaft 7 is fitted with a flange 14 and a gear 15 connected functionally to turbine 2 and the accessory device respectively.

Flange 14 projects axially from casing 8 for easy connection to turbine 2.

Shaft 7 is hollow, and open at opposite axial ends 17 and 18.

Bearings 9a, 9b, 9c, 10 are all rolling bearings, and are arranged along shaft 7 as follows : bearings 9a, 9b, 9c interposed axially between flange 14 and gear 15; and bearing 10 interposed axially between gear 15 and end 17 of shaft 7.

More specifically, bearings 9a, 9b, 9c are arranged axially side by side, with bearing 9b interposed axially between bearings 9a and 9c.

Bearings 9a, 9b, 9c are designed to generate an axial reaction force, parallel to axis A, on shaft 7 to counteract the axial force produced on shaft 7 by gear 15.

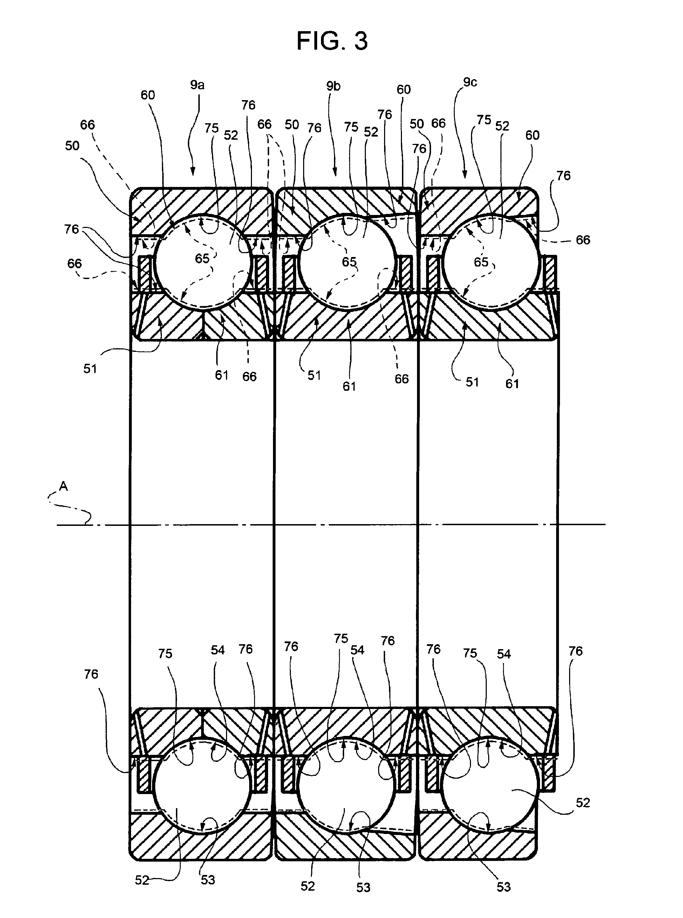

More specifically, each bearing 9a, 9b, 9c comprises (Figures 2 and 3) :
- a ring 50, of axis A, fixed angularly with respect to axis A and connected to casing 8;
- a ring 51, of axis A, which is located radially inwards of ring 50 with respect to axis A, is connected to shaft 7, and rotates integrally with shaft 7 about axis A; and
- a number of balls 52 interposed radially between rings 50 and 51, and rolling on respective races 53, 54 of rings 50, 51.

More specifically, races 53 define rings 50 of bearings 9a, 9b, 9c on the side facing axis A, and races 54 define rings 51 of bearings 9a, 9b, 9c on the side facing away from axis A.

Race 53 of ring 50 of bearing 9a defines two shoulders on axially opposite sides of respective balls 52; race 53 of ring 50 of bearing 9b defines a shoulder on the flange 14 side of, and cooperating with, respective balls 52; and race 53 of ring 50 of bearing 9c defines a shoulder on the flange 14 side of, and cooperating with, respective balls 52.

Race 54 of ring 51 of each bearing 9a, 9b, 9c defines two shoulders on axially opposite sides o respective balls 52.

Ring 51 of bearing 9a is formed in two parts, while rings 51 of bearings 9b and 9c are each formed in one piece.

Rings 50 of bearings 9a, 9b, 9c are clamped axially between a shoulder 80 of casing 8 and a ring nut 81.

More specifically, shoulder 80 cooperates with ring 50 of bearing 9a with the axial interposition of a ring 82; and ring nut 81 cooperates with ring 50 of bearing 9c.

Rings 51 of bearings 9a, 9b, 9c are clamped axially between a flange 85 fixed to shaft 7, and a shoulder 86 of shaft 7.

More specifically, flange 85 cooperates with ring 51 of bearing 9a with the axial interposition of a ring 84; and shoulder 86 cooperates with ring 51 of bearing 9c.

Each bearing 9a, 9b, 9c advantageously comprises a coating 60 of antifriction material (only shown in Figure 3) applied to race 53 of ring 50; and a coating 61 of antifriction material (only shown in Figure 3) applied to race 54 of ring 51.

Coatings 60, 61 serve to reduce friction phenomena between races 53, 54 and balls 52 of each bearing 9a, 9b, 9c.

In the example shown, coatings 60, 61 are multilayer.

The thickness of coatings 60, 61, measured perpendicular to respective races 53, 54, ranges between 0.2 and 0.3 µm.

Coatings 60, 61 are deposited on races 53, 54 by physical vapour deposition.

More specifically, 'physical vapour deposition' is intended to mean an atomic deposition process, whereby the material of coatings 60, 61 is evaporated from a solid and liquid source in molecule form and transported in vapour form through a vacuum or plasma environment to races 53, 54, on which it is condensed.

Coatings 60, 61 may be made of tungsten carbide.

As shown in Figure 3, coating 60, 61 comprises :
- an area 65 applied to a portion 75 of race 53, 54 cooperating with balls 52; and
- two areas 66 applied to respective portions 76 of race 53, 54 detached from balls 52.

More specifically, area 65 is interposed axially between areas 66.

Areas 66 of coatings 61 reduce friction between races 53 of bearings 9a, 9b, 9c and the retainers of respective balls 52.

Balls 52 are made of non-metal material, preferably ceramic.

Rings 50 and/or 51 of bearings 9a, 9b, 9c are made of special steel.

In normal operating conditions of circuit 100, nozzle 101 supplies the oil to lubricate rings 50 of bearings 9a, 9b, 9c.

More specifically, nozzle 101 extends radially with respect to axis A, inside casing 8.

Transmission 6 comprises an annular body 103 interposed radially between nozzle 101 and rings 50 of bearings 9a, 9b, 9c.

Body 103 defines a flow path 104 extending between an opening 105, at the opposite end of nozzle 101 to the tank, and rings 50 of bearings 9a, 9b, 9c.

Body 103 comprises a cavity 106, in which opening 105 in nozzle 101 terminates; two chambers 107 bounded by rings 50 of bearings 9a, 9b, 9c; and two conduits 108 sloping with respect to axis A and interposed between cavity 106 and respective chambers 107.

In normal operating conditions of circuit 100, feed device 11 supplies lubricating oil to rings 51 of bearings 9a, 9b, 9c through end 17 into shaft 7.

As explained in detail below, the oil flows from shaft 7 to rings 51 of bearings 9a, 9b, 9c.

Feed device 11 also supplies lubricating oil to bearing 10 on portion 13 of shaft 7.

More specifically, feed device 11 comprises a tubular member 21 defining a coaxial conduit 22 connected fluidically to the tank; and a number of nozzles 23 supplied by conduit 22 and for expelling oil from feed device 11 to lubricate bearing 10 and rings 51 of bearings 9a, 9b, 9c.

More specifically, member 21 projects radially from casing 8 inside a space between casing 8 and shaft 7 at end 17, and has opposite ends 38, 39 radial with respect to axis A and fixed to casing 8 and facing end 17 of shaft 7 respectively.

Nozzles 23 are adjacent to end 39. More specifically, in the example shown, two nozzles 23 eject the oil to lubricate rings 51 of bearings 9a, 9b, 9c into shaft 7 through end 17; and one nozzle 23, more radially outwards with respect to axis A, ejects oil to lubricate bearing 10 on portion 13 of shaft 7.

Transmission 6 also comprises a gradual-release oil storage device 25 connected fluidically to feed device 11 and bearings 9a, 9b, 9c to feed oil to bearings 9a, 9b, 9c in the event of a malfunction of feed device 11 and/or the tank, and which is located more radially inwards than bearings 9a, 9b, 9c with respect to axis A to spin oil onto bearings 9a, 9b, 9c.

More specifically, storage device 25 is housed inside an axially hollow body 26 fitted coaxially inside shaft 7 and preferably made of aluminium.

In normal operating conditions of circuit 100, body 26 defines an oil flow path from feed device 11 to, and for lubricating, rings 51 of bearings 9a, 9b, 9c; and an oil flow path from feed device 11 to storage device 25 to collect oil inside storage device 25. In the event of a malfunction of feed device 11 and/or the tank, body 26 defines an oil flow path from storage device 25 to bearings 9a, 9b, 9c to again, albeit temporarily, lubricate bearings 9a, 9b, 9c.

More specifically, body 26 is fixed in fluidtight manner inside shaft 7 at opposite axial ends 27, 28 located close to respective ends 17, 18 of shaft 7, and at a section 29 perpendicular to axis A and interposed axially between ends 27 and 28.

The rest of body 26 thus defines a radial gap with shaft 7. More specifically, body 26 and shaft 7 define a radial gap 30 between and bounded axially by section 29 and end 28, for the purpose explained below.

Gap 30 is connected fluidically to rings 51 of bearings 9a, 9b, 9c by a number of - in the example shown, three - conduits 24 formed radially through shaft 7, and permits oil flow from body 26 to bearings 9a, 9b, 9c.

From end 27 to end 28, body 26 defines a succession of chambers :
- a chamber 31 open at opposite axial ends to receive oil from feed device 11 at end 27;
- an annular chamber 32 connected fluidically at opposite axial ends to gap 30 and chamber 31; and
- a chamber 33 housing storage device 25.

More specifically, chamber 33 is isolated fluidically from chamber 32, is closed axially at end 28, extends axially within the axial extension of gap 30, and is connected to chamber 31 by a conduit 34 extending coaxially through and radially inwards of chamber 32.

In normal operating conditions, oil flows from feed device 11 to storage device 25 along the path defined by chamber 31, conduit 34, and chamber 33 in that order.

Chamber 32 is connected to chamber 31 by a number of circumferentially spaced openings 35, each with an axis sloping with respect to axis A and converging towards end 27.

Chamber 32 is also connected to gap 30 by a number of circumferentially spaced openings 36 interposed axially between section 29 and chamber 33, and each with an axis sloping with respect to axis A and converging towards end 27.

In normal operating conditions, oil therefore flows from feed device 11 to rings 51 of bearings 9a, 9b, 9c along the flow path defined by chamber 31, openings 35, chamber 32, openings 36, gap 30 and conduits 24, in that order.

Storage device 25 is housed entirely inside chamber 33, and comprises a cylinder 40 coaxial with axis A and communicating with chamber 31 via conduit 34; and an annular member 41 cooperating radially, on one side, with cylinder 40, and, on the opposite side, with the inner surface of the portion of body 26 facing gap 30.

Cylinder 40 is fixed at opposite axial ends to body 26, is filled with oil by conduit 34 in normal operating conditions of circuit 100, and has a number of holes (not shown) crosswise to axis A to permit oil flow from inside cylinder 40 to member 41.

Member 41 is preferably made of sintered porous material to allow lubricating oil through it, and is connected to gap 30 by a number of radial holes 42 formed through body 26. In the event of a malfunction of circuit 100 and/or feed device 11 and/or the tank, the holes in cylinder 40, together with the pores in member 41 and holes 42 in body 26, allow oil to spin from chamber 33 to gap 30 to temporarily lubricate rings 51 of bearings 9a, 9b, 9c.

The pores of member 41 are sized to resist spin of the oil and so delay feed to bearings 9a, 9b, 9c in the event of a malfunction of feed device 11 and/or the tank.

More specifically, oil spins about axis A first from member 41 to rings 51, and then from rings 51 to rings 50 of bearings 9a, 9b, 9c.

In actual use, shaft 7 is rotated by one of turbines 2 by means of flange 14.

Shaft 7 and turbine 2 rotate at the same speed.

Shaft 7 is supported in rotary and axially fixed manner by bearings 9a, 9b, 9c, 10.

Coatings 60, 61 reduce friction between balls 52 and rings 50, 51 of bearings 9a, 9b, 9c.

Bearings 9a, 9b, 9c, 10 must be oil lubricated to function properly.

In normal operating conditions of circuit 100, nozzle 101 feeds oil to rings 50 of bearings 9a, 9b, 9c along the flow path 104 defined by cavity 106, chambers 107 and conduits 108.

In normal operating conditions of circuit 100, feed device 11 feeds oil from the tank through nozzles 23 onto portion 13 of shaft 7 to lubricate bearing 10, and into chamber 31 of body 26 to lubricate rings 51 of bearings 9a, 9b, 9c.

Most of the oil fed into chamber 31 lubricates rings 51 of bearings 9a, 9b, 9c directly, while the rest is collected in storage device 25.

More specifically, most of the oil flows from chamber 31 through openings 35, chamber 32, and openings 36 into gap 30, and from gap 30 through openings 24 to lubricate bearings 9a, 9b, 9c.

The rest of the oil flows from chamber 31 along conduit 34 to member 41, where it accumulates and from which, by virtue of the porous material of member 41, it is spun through holes 42.

In normal operating conditions of circuit 100, oil outflow from member 41 into gap 30 through holes 42 is impeded by the pressure of the oil already fed into gap 30 from chamber 32.

In the event of a malfunction of feed device 11 and/or the tank, oil feed by nozzles 23 into chamber 31 is cut off, so chamber 32 and gap 30 gradually empty.

In which case, the oil accumulated in storage device 25 is released gradually to temporarily lubricate bearings 9a, 9b, 9c.

In fact, gap 30 being partly empty allows the oil in member 41 to exit through holes 42 into gap 30.

More specifically, oil is expelled gradually from member 41 by virtue of the porosity of member 41.

The oil fed from member 41 into gap 30 flows along conduits 24 to rings 51 and then to rings 50 of bearings 9a, 9b, 9c to continue lubricating bearings 9a, 9b, 9c for a given length of time even in the event of a malfunction of the tank and/or feed device 11.

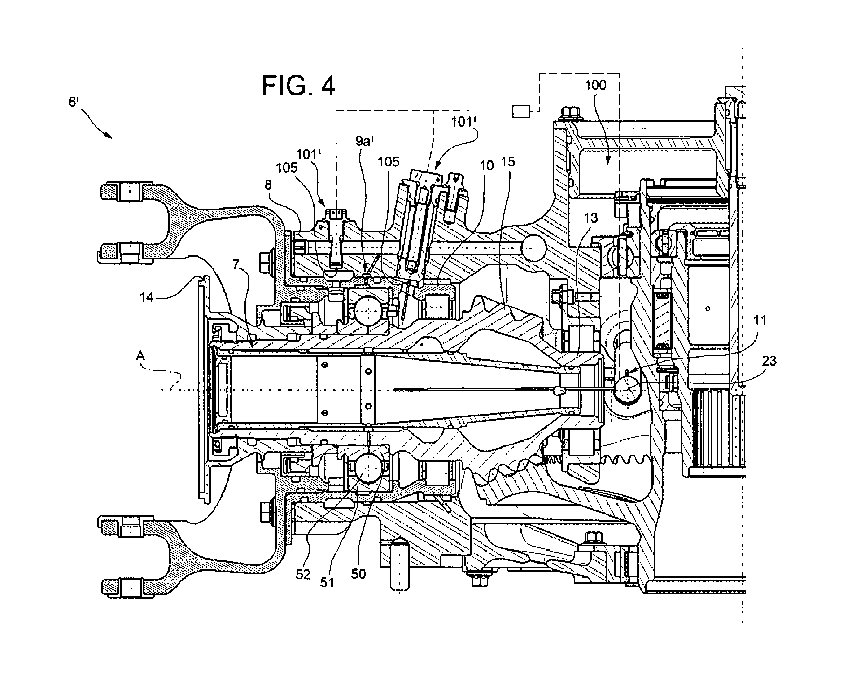

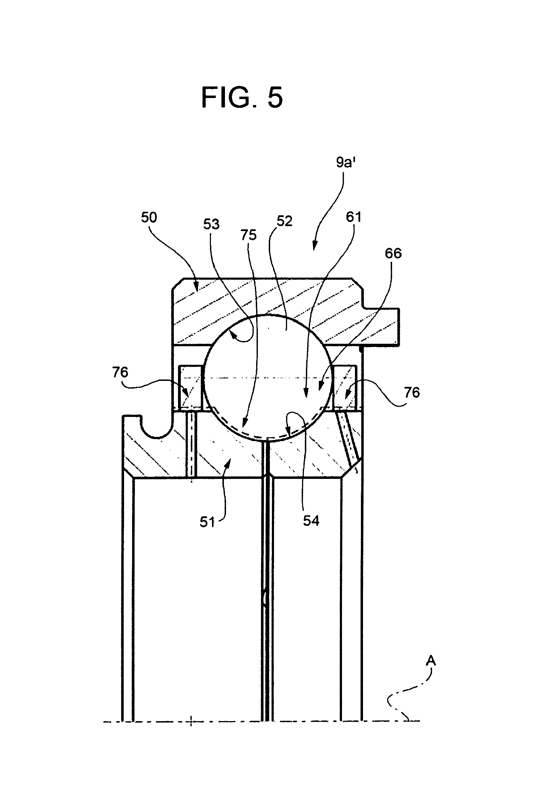

Figures 4 and 5 show a transmission 6' comprising a bearing 9a' in accordance with a different embodiment of the present invention.

Transmission 6' is similar to transmission 6, so is only described below insofar as it differs from transmission 6, and using the same reference numbers, where possible, for corresponding or equivalent component parts of both.

Transmission 6' differs from transmission 6 by comprising two nozzles 101' and one bearing 9a'.

As shown in Figure 5, bearing 9a' differs from bearing 9a by only having coating 61 on race 54, and no coating at all on race 53.

More specifically, coating 61 is made of known DLC, i.e. carbon-like diamond, material, and has the following characteristics :
- thickness of 2 to 3 µm; and/or
- surface roughness of less than 0-10 RA; and/or
- Vickers microhardness of over 2000.

Bearing 9a' operates the same way as bearings 9a, 9b, 9c, and is therefore not described in detail.

The advantages of bearings 9a, 9b, 9c and 9a' according to the present invention will be clear from the above description.

In particular, by employing balls 52 as rolling members and comprising one or more coatings 60, 61 of antifriction material, bearings 9a, 9b, 9c and 9a' provide for withstanding both axial and radial loads typical of 'ball' bearings at rotation speeds, e.g. 6000-33000 rpm, typical of shaft 7.

More specifically, coatings 60, 61 greatly reduce the friction coefficient between balls 52 and respective races 53, 54, which is particularly advantageous in the event of a malfunction of circuit 100 or total lack of oil.

In fact, in the first case, the remaining oil is only able to lubricate, but not cool, bearings 9a, 9b, 9c, 9a', but the reduction in friction by coatings 60, 61 reduces the temperature increase rate and/or keeps bearings 9a, 9b, 9c, 9a' at an albeit high but nondestructive temperature (e.g. of 200-250°C).

In the second case, the friction coefficient is determined by balls 52 contacting coatings 60 (or races 53) and coatings 61, so bearings 9a, 9b, 9c, 9a' operate at very high temperatures of over 200°C, thus resulting in oxidation, loss of hardness, abrasion, and adhesion of balls 52 and races 53, 54.

The Applicant has observed that, in such conditions, the reduction in friction coefficient by coatings 60, 61 reduces the amount of power dissipated by the above phenomena, and so prevents certain parts of bearings 9a, 9b, 9c, 9a' from overheating (up to 900°C), thus resulting in plastification of balls 52 and rings 50, 51.

The Applicant has also confirmed the added advantage of employing ceramic balls 52, which have a greater resistance to high temperature and a lower thermal expansion.

The durability and/or resistance of bearings 9a, 9b, 9c, 9a' are therefore improved, especially in the event of a malfunction of circuit 100 or total lack of oil to transmission 6, 6'.

Finally, because slide of balls 52 is concentrated mainly on race 54, coating 61 on the radially inner race 54 is particularly advantageous.

Clearly, changes may be made to bearings 9a, 9b, 9c, 9a' as described and illustrated herein without, however, departing from the protective scope as defined in the accompanying Claims.

In particular, coating 60 may be applied to only one or two of bearings 9a, 9b, 9c.

Coating 60 may only be applied to races 53 of rings 50 or races 54 of rings 51 of bearings 9a, 9b, 9c.

Coatings 60, 61 applied to races 53, 54 of rings 50, 51 of bearings 9a, 9b, 9c may have the same characteristics as coating 60 applied to bearing 9a', and vice versa.

## Claims

1. A rolling bearing (9a, 9b, 9c; 9a') comprising:
- a first ring (50, 51) extending about an axis (A);
- a second ring (51, 50) extending about said axis (A); and
- at least one ball (52) interposed radially with respect to said axis (A) between said first and second ring (50, 51; 51, 50), and designed to roll on a first race (53, 54) of said first ring (50, 51) and a second race (54, 53) of said second ring (51, 50);
and **characterized by** comprising a coating (60, 61) of antifriction material applied to at least part of said first race (53, 54) of said first ring (50, 51).

2. A bearing as claimed in Claim 1, **characterized in that** said coating (60, 61) comprises :
- a first area (65) applied to a first portion (75) of said first race (53, 54) cooperating with said ball (52); and
- at least one second area (66) applied to a second portion (76) of said second race (54, 53) detached from said ball (52).

3. A bearing as claimed in Claim 2, **characterized by** comprising at least two second areas (66) applied to respective second portions (76) of said second race (54);
said first portion (75) being interposed axially between said second portions (76).

4. A bearing as claimed in any one of the foregoing Claims, **characterized in that** said coating (60, 61) is applied to at least part of said second race (54, 53) of said second ring (51, 50).

5. A bearing as claimed in any one of the foregoing Claims, **characterized in that** said coating (60, 61) is made at least partly of tungsten carbide.

6. A bearing as claimed in any one of the foregoing Claims, **characterized in that** said coating (60, 61) is applied to said first and/or second ring (50, 51) by physical vapour deposition, or is made of diamond-like carbon.

7. A bearing as claimed in any one of the foregoing Claims, **characterized in that** said coating (60, 61) is made of multilayer material.

8. A bearing as claimed in any one of the foregoing Claims, **characterized in that** said coating (60, 61) is 2 to 3 µm thick, measured perpendicular to said first race (53) and towards said second race (54).

9. A bearing as claimed in any one of the foregoing Claims, **characterized in that** said first ring (50) is located radially outwards of said second ring (51) with respect to said axis (A).

10. A bearing as claimed in any one of the foregoing Claims, **characterized in that** said ball (52) is made of :
- non-metal material; or
- metal material comprising a portion of diamond-like carbon.

11. A bearing as claimed in any one of the foregoing Claims, **characterized in that** said ball (52) is made of ceramic.

12. A bearing as claimed in any one of the foregoing Claims, **characterized in that** at least one of said first and second ring (50, 51) is made of special steel.

13. A transmission (6, 6') for an aircraft (1), comprising at least one rotary member (7) rotating about an axis (A) and rotated by a drive member (2); and a casing (8) housing said rotary member (7);
said first ring (50) of said bearing (9a, 9b, 9c; 9a') cooperating with said casing (8), and said second ring (51) of said bearing (9a, 9b, 9c; 9a') cooperating with said rotary member (7);
said bearing (9a, 9b, 9c; 9a') being designed to exert on said rotary member (7) a reaction force having a component parallel to said axis (A).

14. An aircraft (1) comprising :
- a drive member (2); and
- a transmission (6) as claimed in Claim 13; **characterized in that** said rotary member (7) is connected to said drive member (2) to rotate, in use, at the same speed as said drive member (2).
